(19) Europäisches Patentamt
European Patent Office
Office européen des brevets

(11) Publication number: **0 017 020**
**B1**

(12) # EUROPEAN PATENT SPECIFICATION

(45) Date of publication of patent specification: **18.05.83**

(51) Int. Cl.³: **B 01 D 59/34,** C 01 B 4/00

(21) Application number: **80101235.2**

(22) Date of filing: **11.03.80**

(54) **Process for Hydrogen Isotope Separation using hydrofluorocarbons.**

(30) Priority: **02.04.79 US 25978**
**25.02.80 US 124486**

(43) Date of publication of application:
**15.10.80 Bulletin 80/21**

(45) Publication of the grant of the patent:
**18.05.83 Bulletin 83/20**

(84) Designated Contracting States:
**CH DE FR GB**

(56) References cited:
**FR - A - 2 358 916**
**US - A - 4 025 408**

**APPLIED PHYSICS LETTERS, Band 34, Nr. 7, April 1979, American Institute of Physics, J. B. MARLING et al.: "Deuterium separation with 1400-fold single-step isotopic enrichment and high yield of COS-laser multiplephoton dissociation of 2,2 - di - chloro - 1,1,1 - tri-fluoroethane"**

(73) Proprietor: **ALLIED CORPORATION**
**Columbia Road and Park Avenue P.O. Box 2245R (Law Dept.)**
**Morristown New Jersey 07960 (US)**

(72) Inventor: **Hammond, Willis Burdette**
**128 Center Avenue**
**Chatham New Jersey 07928 (US)**
Inventor: **Bigeleisen, Jacob**
**P.O. Box 217**
**St. James New York 11780 (US)**
Inventor: **Tuccio, Sam Anthony**
**36-5B Mt. Pleasant Village**
**Morris Plains New Jersey 07950 (US)**
Inventor: **Hartford Jr., Allen**
**1304 Calla Lejano**
**Sante Fe New Mexico 87501 (US)**

(74) Representative: **Baillie, Iain Cameron et al,**
**c/o Ladas & Parry Isartorplatz 5**
**D-8000 München 2 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 017 020 B1

(56) References cited:
**Spectrochimica Acta, Vol. 27A, p.p. 1359, 1363, 1367 "Schwingungsspektion und Kraftkonstanten symmetrischer Kreisel-III- Die IR-Spektion von HCF3 und DCF" A. Ruoff, H. Bürger & S. Biedermann**

# Process for hydrogen isotope separation using hydrofluorocarbons

## Background of the invention

### 1. Field of the invention

This invention relates to chemical exchange between hydrogenous compounds, in particular to deuterium exchange between hydrofluorocarbons and amines.

### 2. Description of the prior art

As used in this specification and the appended claims, terms such as "hydrogen", "water" and "hydrofluorocarbons" designate materials which include the naturally occurring abundance of deuterium, which is generally in the range from about 0.010 to about 0.016 mole percent relative to the hydrogen content. Substantially pure (isotopically) materials are referred to in symbolic form; e.g. $H_2O$ and $D_2O$. The term "deuterium-enriched" means material whose deuterium concentration has been increased by an exchange process to a level greater than that before the exchange, regardless of whether or not the enriched material has a deuterium concentration greater than the natural abundance. Conversely, "deuterium-depleted" material has had its deuterium concentration reduced by an exchange process or other process to a concentration which may or may not be lower than the natural abundance. Also, as used in this specification and the appended claims, the term "chemical reaction" is meant to include unimolecular reactions, such as isomerization, dissociation and predissociation, in addition to more conventional chemical reactions.

Heavy water ($D_2O$) finds important use as a neutron moderator and coolant in certain atomic power reactors. These reactors are typified by the CANDU (Canadium deuterium-uranium) reactor. They have the important advantage that they do not require the use of uranium enriched in $U^{235}$ as a fuel; instead, they use lower-cost natural uranium. They do, however, require large quantities of heavy water. Typically, 850 kg of $D_2O$ are required per MW of installed electrical capacity. The $D_2O$ cost constitutes about 15% of the capital costs for the power plate. With growing worldwide interest in heavy water reactors, some estimates project $D_2O$ requirements for the atomic power industry to reach 9000 Mg per year by the turn of the century. Accordingly, low cost schemes for producing $D_2O$ are required.

At present, large-scale production of heavy water is based on the Girdler sulfide (GS) process, which involves an isotopic exchange process between hydrogen sulfide ($H_2S$) and water. The overall exchange mechanism can be described by the dual temperature reaction:

$$HDS(g)+H_2O(l) \underset{130°C}{\overset{30°C}{\rightleftharpoons}} H_2S(g)+HDO(l).$$

Using this technology, an enrichment factor, $\beta$, defined as the ratio of the concentration of deuterium in the product to its concentration in the feed material, an effective value of 1.3 is obtained in a single elemental stage of enrichment. After multiple enrichment stages, the final deuterium content in the water using this exchange technique is on the order of 20%. Further deuterium enrichment to the required 99.75 atom percent D is conveniently done by water distillation. The requirement of hundreds of separative elements, coupled with the low D/H ratio in natural water ($\sim 1.5 \times 10^{-4}$), make it necessary to process nearly 40,000 moles of feed material for each mole of product. This makes GS heavy water plants both highly capital intensive and highly energy intensive.

In addition to the GS process, three other chemical exchange processes have been commercialized; namely, water-hydrogen, ammonia-hydrogen, and methylamine-hydrogen. Although each of these processes requires less energy and has a higher single-stage deuterium enrichment factor than the GS process, the latter process is preferred for large-scale operations. The distillation of water and of hydrogen have also been used commercially for heavy water production, but only the latter is economically competitive with the GS process, and then only for small-scale operations. A number of other processes for the production of heavy water have been investigated. These include water electrolysis, combined electrolysis and catalytic exchange, hydrogen adsorption on palladium, methane-hydrogen exchange, hydrogen diffusion, and water crystallization. At present, none of these processes appear to be economically competitive with the GS process.

Laser isotope separation (LIS) provides the basis for additional techniques for $D_2O$ production. In some cases, LIS techniques provide much higher single-stage enrichment factors than does the GS process. Marling and Herman reported the dissociation of $CF_3CHCL_2$ (refrigerant 123) using infrared radiation from a $CO_2$ laser with 1400-fold enrichment of deuterium concentration in a single step (Apple. Phys. Lett, *34*, 439 (1979)). However, this process was later found to be impractical for commercialization. In particular, the infrared absorption ratio for deuterium vs. hydrogen containing molecules in only about 100:1. Hence, when natural $CF_3CHCl_2$ is irradiated, about 98% of the laser energy is absorbed by hydrogen-containing molecules and converted to heat. Benson, U.S.—A—4,081,339, discloses a deuterium enrichment method that involves infrared laser irradiation of

molecules having a structural formula RX, in which R is an organic radical selected from the group consisting of ethyl, isopropyl, t-butyl and 3-cyclopentenyl and in which X is selected from the group consisting of F, Cl, Br and OH. He also discloses the further step of restoring the deuterium abundance in deuterium depleted molecules by treating them with a deuterium containing source.

Another LIS process that is useful as a step in $D_2O$ production involves isotope-selective dissociation of gaseous trifluoromethane (TFM). Natural TFM, containing about 0.015% $CF_3D$, is irradiated with a $CO_2$ laser at an appropriate infrared frequency (for example, 975±50 $cm^{-1}$). The $CF_3D$ absorbs the radiation and dissociates according to

$$CF_3D + nh\nu \rightarrow :CF_2 + DF$$

followed by

$$2:CF_2 \rightarrow C_2F_4.$$

$CF_3H$ absorbs negligible radiation and undergoes little dissociation. The DF product is separated from the remaining gas by conventional chemical methods, such as reaction with a metal oxide. Single-step enrichment factors of about $10^4$ have been demonstrated with this process.

There are several advantages of the TFM deuterium enrichment process over the currently used commercial processes. The extremely high enrichment factor allows a considerable reduction in the volumes of materials being handled in a separation plant at one time, which greatly reduces capital requirements and energy consumption. In the LIS process, nearly all the deuterium can be stripped from the feed material, but in the GS process, thermodynamic restrictions limit the deuterium extraction to 21%. Furthermore, in the GS process, the $H_2S$ working medium is highly toxic, whereas TFM is essentially non-toxic. In the methylamine-hydrogen exchange process, the thermodynamic limitation on $D_2$ extraction is 55%.

To use the TFM process in a commercial heavy water production process, it is essential that the TFM be continuously recycled and its deuterium content replenished through chemical exchange with a protolytic solvent. In view of the low naturally occurring D/H ratio, the dueterium for replenishment must ultimately be derived from an inexpensive feedstock available in large quantities, such as water, hydrogen or ammonia. This requirement does not restrict the exchange medium used to replenish TFM to one of these materials, however, since an exchange medium can, in turn, be deuterium replenished from one of these inexpensive feedstocks.

A process for deuterium replenishment of TFM has been demonstrated by Andreades; namely, the exchange of TFM and methanol-OD, catalyzed by the base sodium methoxide. The exchange rate is too slow, however, to be practical for the present purpose. (J. Am. Chem. Soc. *86*, 2003 (1964)).

Summary

In accordance with one embodiment of the present invention, a process for increasing the concentration of deuterium relative to hydrogen in a hydrofluorocarbon comprises contacting the hydrofluorocarbon in the presence of an alkali metal amide with an amine having a concentration of deuterium at least that which will yield an increase in deuterium concentration of the hydrofluorocarbon upon equilibration. The alkali metal amide catalyzes exchange between the amine hydrogens and the hydrofluorocarbon hydrogens.

This process may be part of a process for obtaining a compound enriched in deuterium. Said process comprises the known method of:

(a) exposing a gaseous hydrofluorocarbon to infrared laser radiation of a predetermined frequency to selectively cause a chemical reaction involving hydrofluorocarbon molecules containing deuterium without substantially affecting hydrofluorocarbon molecules not containing deuterium, thereby producing, as reaction products, a compound enriched in deuterium and hydrofluorocarbon depleted in deuterium; combined with a new method, which comprises:

(b) enriching the deuterium content of the depleted hydrofluorocarbon by contacting the depleted hydrofluorocarbon with an alkali metal amide and an amine having a concentration of deuterium at least that which will yield an increase in deuterium concentration of the hydrofluorocarbone upon equilibration, whereby the amine becomes depleted in deuterium.

The deuterium enriched compound produced in step (a) can be converted to heavy water ($D_2O$) by well-known methods. The deuterium enriched hydrofluorocarbon produced in step (b) returns to step (a) to close the cycle. Using well-known technology, the depleted amine from step (b) may be deuterium enriched by exchange with a natural deuterium source such as hydrogen or water.

By providing an efficient process for replenishing a dueterium-depleted hydrofluorocarbon, particularly TFM, the present invention enables one to realize the advantages of the LIS method for obtaining a deuterium enriched compound over the prior art GS method. As indicated above, these advantages include considerable reductions in process costs, energy requirements and potential toxicity problems.

Brief description of the drawings

The drawings are schematic flow diagrams depicting processes for preparing a compound enriched in deuterium by the present invention.

Figure 1 shows a process in which photolyzed TFM is deuterium enriched by exchange with liquid ammonia.

Figure 2 shows a process in which gaseous hydrogen provides deuterium to photolyzed TFM through an intermediate amine.

Figure 3 shows a process in which water provides deuterium to photolyzed TFM through an intermediate amine.

Figure 4 shows a process in which water provides deuterium to gaseous hydrogen, which in turn provides deuterium to photolyzed TFM through an intermediate amine.

Detailed description of the invention

The present invention comprises a process for increasing the concentration of deuterium relative to hydrogen (D/H ratio) in a hydrofluorocarbon by chemical exchange with an amine in the presence of an alkali metal amide. The chemical exchange can be described by the equation:

$$R_FH \underset{BH}{\overset{BM}{\rightleftharpoons}} [R_FM] \underset{BM}{\overset{BD}{\rightleftharpoons}} R_FD$$

where BH is an amine used in a conventional chemical exchange and BM is the alkali metal salt of the amine. $R_FH$ is a hydrofluorocarbon and $R_FD$ is the deuterium-enriched form of the hydrofluorocarbon. $R_FM$ has only a transient existence in the exchange process.

As used in this specification and the appended claims, hydrofluorocarbons denote compounds which include at least one atom each of hydrogen, fluorine and carbon and optionally contain one or more atoms of chlorine or bromine. Aliphatic hydrofluorocarbons having two or fewer carbon atoms are preferred. Examples of suitable hydrofluorocarbons and their refrigerant numbers are:

| | |
|---|---|
| $CHCl_2F$ | 21 |
| $CHClF_2$ | 22 |
| $CHF_3$ | 23 |
| $CH_2F_2$ | 32 |
| $CH_2ClF$ | 31 |

and either or any of the isomers of:

| | |
|---|---|
| $C_2HCl_2F_3$ | 123 |
| $C_2HClF_4$ | 124 |
| $C_2HF_5$ | 125 |
| $C_2H_2F_4$ | 134 |
| $C_2H_2ClF_3$ | 133 |
| $C_2H_3F_3$ | 143 |
| $C_2H_4F_2$ | 152 |

Among these hydrofluorocarbons, those of the formula $HCF_2X$, wherein X is F, $CF_3$, $CHF_2$, $CH_2F$ or $CH_3$, are more preferred, with trifluoromethane (TFM) most preferred for reasons discussed below.

By the process of this invention, a hydrofluorocarbon, for example gaseous TFM, may be replenished by cocurrent or countercurrent exchange with a solution of alkali metal amide in liquid ammonia or other aliphatic or alicyclic amine. The exchange is accomplished using standard gas-liquid contacting equipment, such as bubble-cap apparatus, sieve plates, packed columns or the like. If liquid ammonia is used at room temperature, the TFM must be compressed to bring it to the necessary pressure (2—3 MPa) for pumping through the ammonia; then, later, the TFM must be expanded again to near atmospheric pressure or below before being excited with the laser. Other aliphatic or alicyclic amines, preferably methylamine or cyclohexylamine, are preferred over ammonia because of their lower vapor pressure, which simplifies separating the hydrofluorocarbon from the amine following exchange. If the amine is to be deuterium replenished by exchange with water, it should have low water solubility to facilitate separation after exchange. Thus, the use of a low vapor pressure amine with low solubility in water significantly reduces the total energy required to deuterium enrich the hydrofluorocarbon. On the other hand, low vapor pressure requires the use of higher distillation temperatures for separating the amine from the alkali metal salt. Primary amines have the advantage (over secondary and tertiary amines) that more exchangeable hydrogens are available. A mixture of amines may be preferred over a single amine. For example, the hydrogen-amine exchange rate may be increased significantly if small amounts of trimethylamine are added to monomethylamine. These factors must all be balanced in selecting an amine.

The alkali metal salt, i.e. the metal amide used in the exchange process, serves to catalyze the exchange. The rate of exchange depends on both the amine and the metal salt. Catalytic activity requires that the metal amide be soluble in the amine. Generally, the solubility of the alkali metal salt in amines is Cs>K>Na>Li and the same order is observed for rate of catalysis. However, cost considerations may require a tradeoff.

In a preferred embodiment of this invention, the above-described exchange process is part of a process for obtaining a compound enriched in deuterium, which comprises:

isotope-selective infrared laser excitation of TFM to produce a dissociation product enriched in deuterium and deuterium-depleted TFM and

replenishment of deuterium in depleted TFM by the above-described chemical exchange between TFM and an amine.

The laser excitation step, preferably using infrared radiation having a frequency selected from the frequencies of $975 \pm 50$ $cm^{-1}$, $2150 \pm 100$ $cm^{-1}$ and $2405 \pm 100$ $cm^{-1}$ yields deuterium fluoride (DF), tetrafluoroethylene ($C_2F_4$) and TFM depleted in deuterium. DF may be collected by a number of known chemical techniques; for example, complex formation with an alkali fluoride or a Lewis base. Later, DF recovery is achieved by heating the complex. For heavy water production, DF is converted to $D_2O$ by well-known methods, such as reaction with metal oxide to form the metal fluoride, $D_2O$ and HDO. The $D_2O$ and HDO remain adsorbed on the metal oxide surface and can be removed by heating. The $C_2F_4$ is a stable and valuable by-product, but it should not be allowed to build up to significant concentrations. It tends to polymerize and coat photolysis chamber windows, foul moving parts and plug adsorbents. One of the methods of $C_2F_4$ extraction is chlorination of the $C_2F_4$ to $C_2Cl_2F_4$ and extraction by condensation. Small amounts of TFM must be added during the process to make up for the DF and $C_2F_4$ removed.

As discussed above, deuterium-depleted TFM may be replenished by chemical exchange with liquid ammonia. A practical heavy water production facility would then require a large source of ammonia. For reasons discussed above, exchange with aliphatic or alicyclic amines, for example methylamine or cyclohexylamine, is preferred. In that case, a practical system would require that the amine as well as the TFM be recycled. The deuterium-depleted amine may be replenished by exchange with hydrogen or water by known techniques. (See, for example, E. A. Symons et al., J. Am. Chem. Soc. *101*, 6704 (1979)). A large-scale heavy water production facility would then require a large source of hydrogen or water. Hydrogen and hydrogen-nitrogen mixtures are available from synthetic ammonia plants, which are natural gas as their primary source. Hydrogen-carbon monoxide mixtures derived from coal gas synthesis plants are another potential source of hydrogen.

Figure 1 shows a schematic flow diagram of a process for obtaining a compound enriched in deuterium. The deuterium source is liquid ammonia. TFM vapor is laser irradiated in a photolysis chamber 1 and then separated from the DF and $C_2F_4$ products in separator 2. After product removal, the deuterium-depleted TFM is compressed and cycled through the liquid ammonia with amide catalyst in exchange column 3 for deuterium replenishment. The isotopic fractionation factor for this exchange is estimated to be near unity. Amide catalyst and TFM are removed from the deuterium-depleted ammonia in concentrator 4, and amide catalyst concentrated in liquid ammonia is recirculated to the top of exchange column 3. This system appears to have two practical drawbacks. The first is the high cost of continual compression of the TFM to bring it to the 2—3 MPa pressure necessary to pump it through the liquid ammonia at room temperature. The second objection is possible contamination of the ammonia with amide and/or TFM, which would seriously affect the resale value of the ammonia.

A process for stripping dueterium from hydrogen gas using an amine has been commercialized in Canada (W. P. Wynn, "AECL-Sulzer Amine Process for Heavy Water" in *Separation of Hydrogen Isotopes,* edited by H. K. Rae, ACS symposium Series, Vol. 68 (1978)). The isotopic fractionation factor is about 4.1 at room temperature, with the deuterium concentrating in the amine. As a result, the deuterium concentration in the amine is about 0.05% when it is in equilibrium with hydrogen gas of natural isotopic abundance.

Figure 2 shows a schematic flow diagram of an embodiment of the present invention that utilizes hydrogen gas as the source of deuterium. The system shown there consists of two countercurrent towers, a feedstock stripper 10 and a TFM reenricher 11. The feedstock stripper 10 strips HD from the hydrogen source through chemical exchange with an aliphatic or alicyclic amine. TFM reenricher 11 transfers deuterium from the amine to TFM. Since the isotopic fractionation factor in the TFM/amine exchange is about unity, the $CF_3D$ concentration fed to the photolytic chamber is about 0.05%. After isotope-selective laser excitation and reaction, the products are separated and the depleted TFM returns to the TFM reenricher 11. The amine with base catalyst exiting from the TFM reenricher is returned to the top of the feedstock stripper 10. Separation of the amine from hydrogen is easily accomplished by absorption, adsorption or compression techniques or by other methods well known in the art. Separation of the amine from the TFM is simplified if the amine is non-volatile. The amine is under complete recycle in this feed stage and serves to transfer deuterium from the hydrogen feed to the TFM.

The flow diagram of Figure 3 shows another embodiment of the present invention wherein water provides deuterium to replenish TMF. Deuterium is stripped from the water in an acid or base catalyzed exchange with an amine in water feed stripper 20. The amine, in turn, enriches TFM in TFM reenricher

21. The metal salt catalyst used in the amine/TFM exchange must be removed before the water/amine exchange, because the catalyst is easily hydrolyzed. For the same reason, the amine must be separated from the water and dried after replenishment. The catalyst is removed in concentrator 22 and returned to the top of TFM reenricher 21.

Figure 4 shows an embodiment of the present invention wherein a combination of water and hydrogen is used to replenish the amine. In this embodiment, hydrogen gas is deuterium enriched by contact with water feed in a feedstock stripper column 30. This column can be either a steam-hydrogen transfer column or a heterogeneous catalytic exchange column that uses a non-wetting catalyst suspended in liquid water. The deuterium-enriched hydrogen is contacted with deuterium-depleted amine in transfer column 31. Deuterium-enriched amine and deuterium-depleted TFM are contacted in TFM reenricher 32.

This invention is more fully illustrated by the following examples. The specific techniques, conditions, materials and reported data set forth are exemplary and should not be construed as limiting the scope of the invention.

Example 1

To test deuterium exchange between TFM and liquid ammonia, several exchange reactions were run between TFM-d and natural ammonia. The TFM-d was obtained from Merck, Sharp, and Dohme of Canada and contained 98.0% $CF_3D$, 1.1% $CF_3H$, and 0.9% $C_2F_4$. The ammonia was obtained from Matheson Gas Products and was 99.99% pure. The deuterium exchange reactions in these experiments and in some of the other examples are in the reverse direction to that which would normally be encountered in applications to heavy water production; i.e., deuterium is transferred from the TFM to the amine. The reaction mechanisms are chemically equivalent, except that the direction of deuterium transfer is dependent on starting concentrations. TFM-d was used as a matter of convenience and to make easier the analysis of the reaction products.

In each of the runs in this example, a mixture of TFM-d and ammonia was frozen on top of a sample of potassium amide salt in a 21 cm³ volume, glass reaction vial. Liquid nitrogen ($LN_2$) at −196°C was placed around the reaction vial to condense the gases. The $LN_2$ was then removed and replaced by a chloroform slush bath at −63°C. At this temperature, ammonia is liquid, whereas TFM-d is still gaseous. In run 6, the liquid ammonia was held at −35°C using an ethylene dichloride slush bath, but the other conditions were the same as in runs 1—5. In each run, the mixture was allowed to stand for a fixed amount of time and then returned to room temperature, thereby re-gasifying the ammonia. The TFM and ammonia gases were then examined on a mass spectrometer. The conversion of $CF_3D$ to $CF_3H$ was determined from the relative amplitudes of the $CF_2H+$ ion (amu 51) and the $CF_2D+$ ion (amu 52). The results are given in Table I. It should be noted that the deuterium exchange rate in these experiments was severely limited by the diffusion rate of the TFM through the liquid ammonia surface.

TABLE I

| Run # | Liquid $NH_3$ (mg) | TFM-d (mg) | $KNH_2$ (mg) | Reaction time (min.) | H/D ratio | % of equilibrium exchange |
|---|---|---|---|---|---|---|
| | Initial TFM-d | | | | 0.011 | |
| 1 | 159 | 68 | 23 | 30 | 2.06 | 7% |
| 2 | 80 | 17 | 28 | 30 | 14.2 | 22% |
| 3 | 80 | 17 | 13 | 60 | 7.57 | 12% |
| 4 | 508 | 105 | 9.5 | 30 | 0.659 | 1.1% |
| 5 | 828 | 161 | 12.5 | 30 | 0.398 | 0.6% |
| 6 (−35°C) | 390 | 80 | 10 | 30 | 0.815 | 1:3% |

Example 2

A deuterium exchange reaction was run between TFM-d and natural cyclohexylamine (CHA). The CHA was initially dried using CaH pellets. Enough potassium amide was added to the CHA to make a concentration of potassium cyclohexylamide (KCHA) adequate for deuterium exchange. The anticipated reaction is:

$$C_6H_{11}NH_2+KNH_2 \rightleftharpoons C_6H_{11}NHK+NH_3$$

Although the reverse reaction is more favorable, sufficient KCHA was formed to catalyze the deuterium exchange reaction. Approximately 2 ml of the CHA solution was placed in a 23 cm³ reaction vial. A 66.3 mg sample of TFM-d gas was condensed onto the CHA using $LN_2$ and then the reaction vial was brought back to room temperature. The vapor pressure of the TFM-d in the vial was approximately 101

kPa (1 atmosphere). The vial was shaken for five minutes and then allowed to stand for 25 minutes. The TFM was then separated from the CHA cryogenically and examined on a mass spectrometer. The ratio of $CF_3H$ to $CF_3D$ was 0.121, representing a deuterium exchange of 9.8%.

Example 3

Further exchange experiments were run between TFM-d and CHA. For these experiments, the KCHA was prepared by reacting CHA with KH. 0.4 mg samples of TFM-d were bubbled through a 2 cm height of CHA/KCHA solution using a He carrier gas. The TFM-d/He gas bubbles were 0.7±0.4 mm in diameter and their contact time with the amine solution was 0.1 to 0.2 second. The TFM-d samples were collected cryogenically and examined on a mass spectrometer. Table II gives the results of these experiments.

TABLE II

| Run # | KCHA Conc. (mol/L) | H/D |
|---|---|---|
| 1 | 0.0067 | 1.08 |
| 2 | 0.0022 | 0.724 |

Example 4

A deuterium exchange reaction was run between natural TFM and CHA-$d_2$ ($C_6H_{11}ND_2$) using the same procedure as in Example 3. The CHA-$d_2$ was initially prepared by chemical exchange of natural CHA with $D_2O$. The deuterium content of the amine radical ($ND_2$) in the prepared sample of CHA-$d_2$ was 94.7 atom %. A 4.9 mg sample of natural TFM was bubbled through a 5 cm height of a 0.04 molar solution of KCHA in CHA-$d_2$. Mass spectrum analysis of the collected TFM showed a 38% conversion of $CF_3H$ to $CF_3D$.

Example 5

In this example, deuterium exchange was made between TFM-d and a 0.06 molar solution of potassium methylamide (KMA) in liquid monomethylamide (MMA) at −73°C. The solution was initially prepared by reacting potassium metal with liquid MMA at room temperature in a high pressure vessel. The vessel was then submerged in a trichloroethylene slush bath and a 0.71 mg sample of TFM-d was bubbled through a 5 cm height of the solution using a helium carrier gas. Analysis of the collected TFM-d showed a 77% conversion of $CF_3D$ to $CF_3H$.

**Claims**

1. A process for obtaining compounds enriched in a desired isotope of hydrogen by irradiating a halocarbon compound with infrared laser radiation characterized in that the halocarbon comprises subatmospheric pressure gaseous trifluoromethane containing said desired isotope and one or more other isotopes of hydrogen and the infrared laser radiation is of a predetermined frequency, which selectively dissociates trifluoromethane molecules containing said desired isotope of hydrogen without substantially dissociating trifluoromethane molecules containing other isotopes of hydrogen, thereby producing a dissociation product enriched in said desired isotope, and separating the resulting dissociation product enriched in said desired isotope from the remainder of the gas.

2. The process of claim 1 wherein said desired isotope is an isotope of the group consisting of hydrogen and deuterium.

3. The process of claim 1 wherein said predetermined frequency is selected from frequencies of 975±50 $cm^{-1}$, 2150±100 $cm^{-1}$, and 2405±100 $cm^{-1}$.

4. A process for increasing the concentration of deuterium relative to hydrogen in a hydrofluorocarbon, which comprises contacting the hydrofluorocarbon in the presence of an alkali metal amide with an amine having a concentration of deuterium at least that which will yield an increase in deuterium concentration of the hydrofluorocarbon upon equilibration.

5. The process of claim 4 wherein the hydrofluorocarbon is of the formula $HCF_2X$, wherein X is F, $CF_3$, $CHF_2$, $CH_2F$ or $CH_3$.

6. The process of claim 4 wherein the amine is selected from the group consisting of ammonia, aliphatic amines and alicyclic amines.

7. A process for obtaining a compound enriched in deuterium in which a gaseous hydrofluorocarbon is exposed to infrared laser radiation of a predetermined frequency to selectively cause a chemical reaction involving hydrofluorocarbon molecules containing deuterium without substantially affecting hydrofluorocarbon molecules not containing deuterium, thereby producing, as reaction products, a compound enriched in deuterium and hydrofluorocarbon depleted in deuterium and in which the deuterium content of the depleted hydrofluorocarbon with a deuterium-containing source characterized in that the deuterium-containing source comprises an alkali metal amide and an

amine having a concentration of deuterium at least that which will yield an increase in deuterium concentration of the hydrofluorocarbon upon equilibration, whereby the amine becomes depleted in deuterium.

8. The process of claim 7 further characterized in that the deuterium content of the depleted amine is replenished by contacting the depleted amine with a deuterium source selected from the group consisting of hydrogen and water, whereby the deuterium source becomes depleted in deuterium.

9. The process of claim 8 wherein the amine is an aliphatic or alicyclic amine.

10. The process of claim 8 wherein the deuterium source contacting the depleted amine is hydrogen and wherein the deuterium content of the depleted hydrogen is replenished by contacting the depleted hydrogen with water.

**Patentansprüche**

1. Verfahren zum Gewinnen von mit einem gewünschten Wasserstoffisotop angereichterten Verbindungen durch Bestrahlung einer Halogenkohlenstoffverbindung mit Infrarotlaserstrahlung, dadurch gekennzeichnet, daß der Halogenkohlenstoff mindestens teilweise aus gasförmigem Trifluormethan besteht, welches das gewünschte Isotop und ein oder mehrere andere Isotope des Wasserstoffs enthält und unter einem Unterdruck steht, und die Infrarotlaserstrahlung eine vorherbestimmte Frequenz hat, bei der das gewünschte Wasserstoffisotop enthaltende Trifluormethanmoleküle selektiv dissoziiert werden, ohne daß eine beträchtliche Dissoziation von andere Isotope des Wasserstoffs enthaltende Trichlormethanmoleküle stattfindet, so daß ein mit dem gewünschten Isotop angereichertes Dissoziationsprodukt erhalten wird, das danach von dem Restgas abgetrennt wird.

2. Verfahren nach Anspruch 1, dadurch gekennzeichnet, daß das gewünschte Isotop ein Isotop der aus Wasserstoff und Deuterium bestehenden Klasse ist.

3. Verfahren nach Anspruch 1, dadurch gekennzeichnet, daß die vorherbestimmte Frequenz aus den Frequenzen von $975 \pm 50\ cm^{-1}$, $2150 \pm 100\ cm^{-1}$ und $2405 \pm cm^{-1}$ ausgewählt wird.

4. Verfahren zum Erhöhen der Konzentration von Deuterium relativ zu der Konzentration des Wasserstoffs in einem Fluorkohlenwasserstoff, dadurch gekennzeichnet, daß der Fluorkohlenwasserstoff in Anwesenheit eines Alkalimetallamids mit einem Amin in Berührung gebracht wird, in dem die Deuteriumkonzentration mindestens so hoch ist, daß bei einem Herstellen eines Gleichgewichts die Konzentration des Deuteriums in dem Fluorkohlenwasserstoff zunimmt.

5. Verfahren nach Anspruch 4, dadurch gekennzeichnet, daß der Fluorkohlenwasserstoff die Formelt $HCF_2X$ hat, wobei X die Bedeutung F, $CH_3$, $CHF_2$, $CH_2$, $CH_2F$ oder $CH_3$ hat.

6. Verfahren nach Anspruch 4, dadurch gekennzeichnet, daß das Amin aus der aus Ammoniak, den aliphatischen Aminen und den alicyclischen Aminen bestehenden Klasse ausgewählt wird.

7. Verfahren zum Gewinnen einer mit Deuterium angereichterten Verbindung, in dem ein gasförmiger Fluorkohlenwasserstoff einer Infrarotlaserstrahlung einer vorherbestimmten Frequenz ausgesetzt und dadurch selektiv eine chemische Reaktion herbeigeführt wird, an der deuteriumhaltige Fluorkohlenwasserstoffmoleküle beteiligt sind, ohne daß deuteriumfreie Fluorkohlenwasserstoffe beeinflußt werden, wobei als Reaktionsprodukte eine mit Deuterium angereicherte Verbindung und deuteriumarmer Fluorkohlenwasserstoff erhalten werden, und der Deuteriumgehalt des an deuteriumarmen Fluorholenwasserstoffs aus einer deuteriumabgebenden Substanz ergänzt wird, dadurch gekennzeichnet, daß die deuteriumabgebende Substanz ein Alkalimetallamid und ein Amin enthält, das Deuterium mindestens in einer so hohen Konzentration enthält, daß bei der Herstellung eines Gleichgewichts die Deuteriumkonzentration des Fluorkohlenwasserstoffs erhöht und dadurch das Amin an Deuterium verarmt wird.

8. Verfahren nach Anspruch 7, dadurch gekennzeichnet, daß der Deuteriumgehalt des deuteriumarmen Amins dadurch ergänzt wird, daß das deuteriumarme Amin mit einer Deuterium abgebenden Substanz in Berührung gebracht wird, die aus der aus Wasserstoff und Wasser bestehenden Klasse ausgewählt ist und dadurch an Deuterium verarmt wird.

9. Verfahren nach Anspruch 8, dadurch gekennzeichnet, daß das Amin ein aliphatisches oder alicyclisches Amin ist.

10. Verfahren nach Anspruch 8, dadurch gekennzeichnet, daß Wasserstoff als die deuteriumabgebende Substanz verwendet wird, die mit dem deuteriumarmen Amin in Berührung gebracht wird, und der Deuteriumgehalt des deuteriumarmen Wasserstoffs dadurch ergänzt wird, daß der deuteriumarme Wasserstoff mit Wasser in Beruhrung gebracht wird.

**Revendications**

1. Procédé d'obtention de composés enrichis en un isotope désiré de l'hydrogène par irradiation d'un composé halogénocarboné avec un rayonnement laser à infrarouges, caractérisé en ce que l'halogénocarbone comprend du trifluorométhane gazeux à une pression sous-atmosphérique contenant l'isotope désiré et un ou plusieurs autres isotopes de l'hydrogène, et le rayonnement laser à infrarouges a une fréquence prédéterminée, qui dissocie sélectivement les molécules de trifluorométhane

contenant l'isotope désiré de l'hydrogène sans sensiblement dissocier les molécules de trifluorométhane contenant d'atures isotopes de l'hydrogène, d'où il résulte l'obtention d'un produit de dissociation enrichi dans ledit isotope et la séparation du reste du gaz du produit de dissociation résultant enrichic dans ledit isotope.

2. Procédé selon la revendication 1, caractérisé en ce que l'isotope désiré est un isotope du groupe constitué de l'hydrogène et du deutérium.

3. Procédé selon la revendication 1, caractérisé en ce que la fréquence prédéterminée est choisie parmi les fréquences suivantes: 975±50 $cm^{-1}$, 2150±100 $cm^{-1}$ et 2405±$cm^{-1}$.

4. Procédé d'augmentation de la concentration de deutérium par rapport à l'hydrogène dans un hydrocarbure fluoré, caractérisé en ce qu'il comprend la mise en contact de l'hydrocarbure fluoré en présence d'un amide de métal alcalin avec une amine ayant une concentration en deutérium égale au moins à celle qui conduit à une augmentation de la concentration en deutérium de l'hydrocarbure fluoré lors de l'équilibration.

5. Procédé selon la revendication 4, caractérisé en ce que l'hydrocarbure fluoré a la formule $HCF_2X$ où X est F, $CF_3$, $CHF_2$, $CH_2F$ ou $CH_3$.

6. Procédé selon la revendication 4, caractérisé en ce que l'amine est choisie dans le groupe constitué de l'ammoniaque, des amines aliphatiques et des amines alicycliques.

7. Procédé d'obtention d'un composé enrichi en deutérium, dans lequel l'hydrocarbure fluoré gazeux est exposé à un rayonnement laser à infrarouges de fréquence prédéterminée de manière à provoquer sélectivement une réaction chimique impliquant des molécules d'hydrocarbure fluoré contenant du deutérium sans affecter sensiblement les molécules d'hydrocarbure fluoré ne contenant pas de deutérium, d'où il résulte l'obtention, comme produits de réaction, d'un composé enrichi en deutérium et un hydrocarbure fluoré appauvri en deutérium et où la teneur en deutérium de l'hydrocarbure fluoré appauvri est rétablie avec une source contenant du deutérium, caractérisé en ce que la source contenant du deutérium comprend un amide de métal alcalin et une amine ayant une concentration en deutérium égale à au moins celle qui donne une augmentation de la concentration en deutérium de l'hydrocarbure fluoré lors de l'équilibration, d'où il résulte que l'amine s'appauvrit en deutérium.

8. Procédé selon la revendication 7, caractérisé en ce que la teneur en deutérium de l'amine appauvrie est rétablie par mise en contact de l'amine appauvrie avec une source de deutérium choisie dans le groupe constitué de l'hydrogène et l'eau, d'où il résulte que la source de deutérium s'appauvrit en deutérium.

9. Procédé selon la revendication 8, caractérisé en ce que l'amine est une amine aliphatique ou alicyclique.

10. Procédé selon la revendication 8, caractérisé en ce que la source de deutérium en contact avec l'amine appauvrie est l'hydrogène, et la teneur en deutérium de l'hydrogène appauvri est rétablie par mise en contact de l'hydrogène appauvri avec de l'eau.

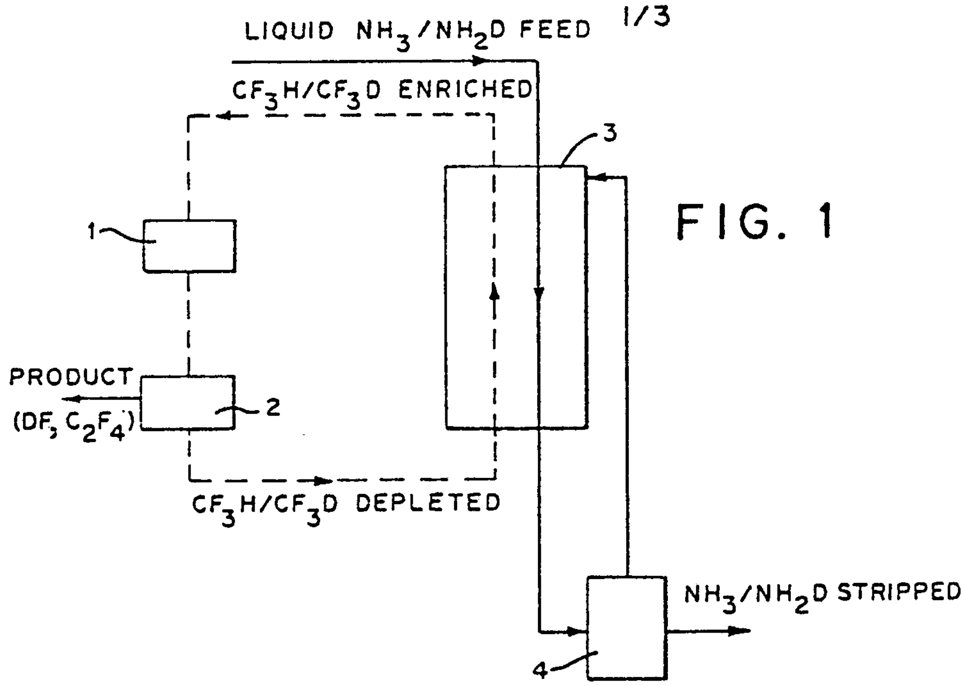
LIQUID $NH_3/NH_2D$ FEED
$CF_3H/CF_3D$ ENRICHED
3
1
PRODUCT
($DF$, $C_2F_4$)
2
$CF_3H/CF_3D$ DEPLETED
$NH_3/NH_2D$ STRIPPED
4

FIG. 1

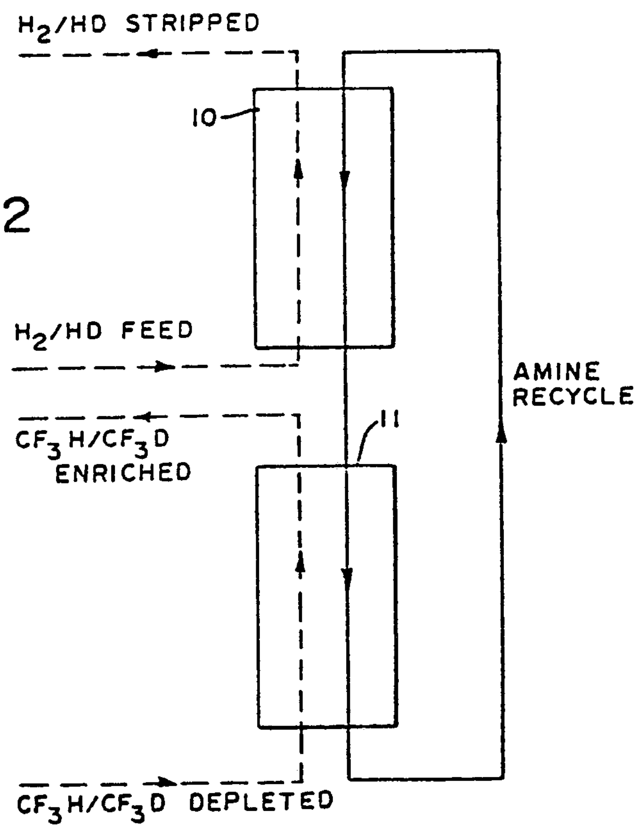
$H_2/HD$ STRIPPED
10
$H_2/HD$ FEED
$CF_3H/CF_3D$
ENRICHED
11
AMINE
RECYCLE
$CF_3H/CF_3D$ DEPLETED

FIG. 2

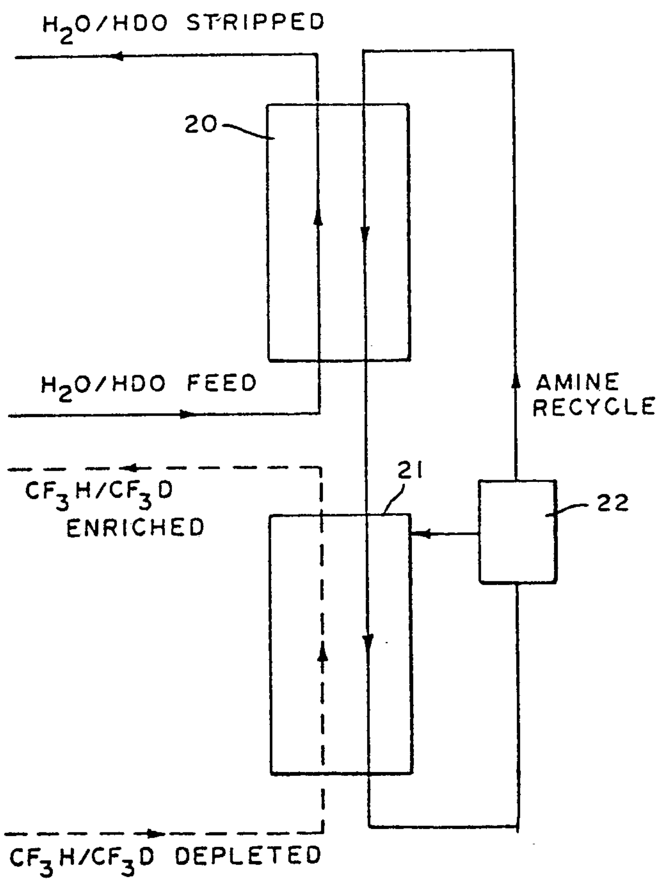

$H_2O$/HDO STRIPPED
20
$H_2O$/HDO FEED
AMINE RECYCLE
21
22
$CF_3H/CF_3D$ ENRICHED
$CF_3H/CF_3D$ DEPLETED


FIG. 3

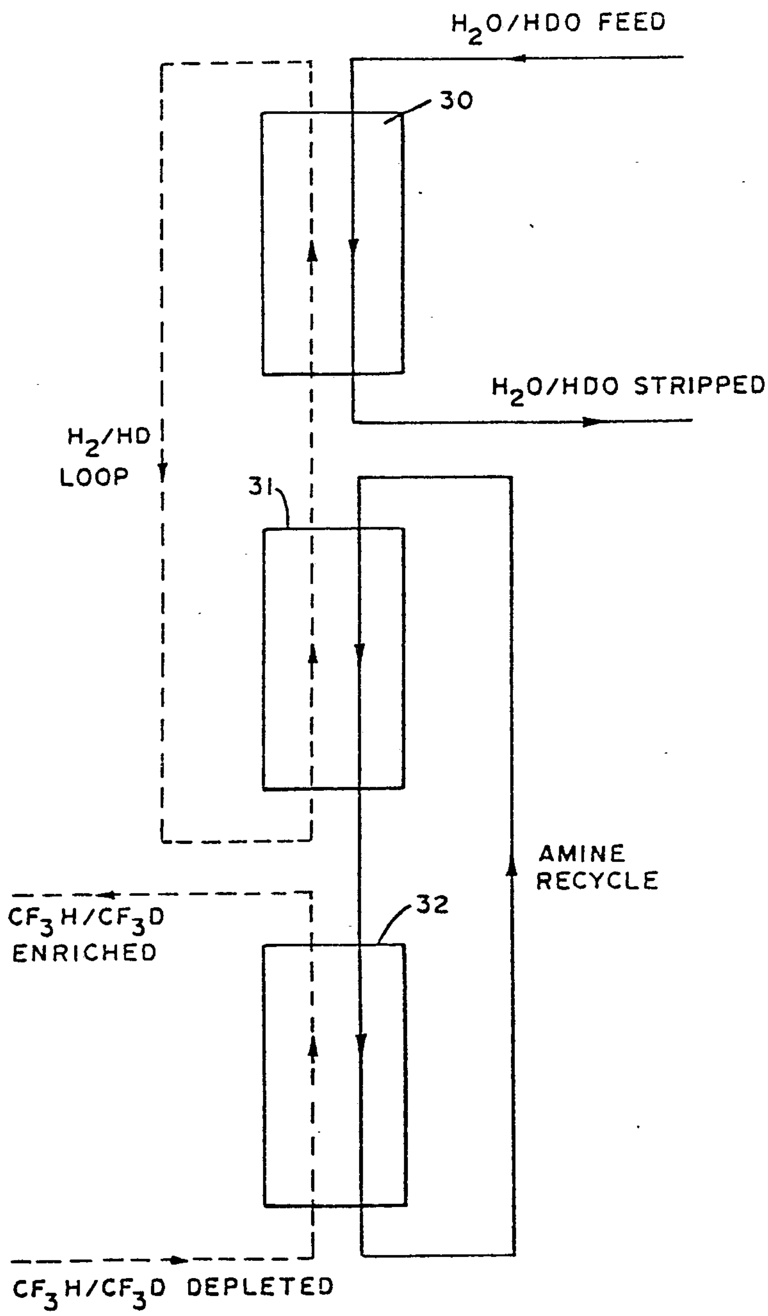
H2O/HDO FEED
30
H2O/HDO STRIPPED
H2/HD
LOOP
31
AMINE
RECYCLE
CF3H/CF3D
ENRICHED
32
CF3H/CF3D DEPLETED

FIG. 4